# EUROPEAN PATENT APPLICATION

(11) **EP 1 310 899 A2**
(43) Date of publication of application: **14.05.2003**
(21) Application number: 02425478.1
(22) Date of filing: 24.07.2002
(51) Int. Cl.: G06F 17/60

(54) **Method using telematic means for performing offers and sales**

(30) Priority: 26.07.2001 IT RM20010454
(71) Applicant: Enel Real Estate, 00191 Roma (IT)
(72) Inventor: Galasso, Fiorentino, 00191 Roma (IT)
(74) Representative: Fiammenghi, Carlo

(57) **Abstract**

A technique of presentation and performance of offer and sale procedures for real estate, using telematic means and inviting the proponent to make an offer, in real-time, based on a reiterated series of irrevocable proposals of purchase and on the preliminary "enabling" or qualification of the purchaser, made possible by: the payment of an enrolment fee, the assignment of a pseudonym and a related secret code, and the receipt of a first irrevocable purchase proposal in written form. The performance of new offers is made by taking account of the classification, during the whole offering period, and by the use of the pseudonym and of the related secret code; wherein, the publication of a proposal at a higher price implies the refusal by the seller, of all proposals at a lesser price. The closing of the market is subject to a previous unlimited postponement, through a possible unlimited time extension, and the publication of the classifications, the immediate refund of the enrolment fee to the entitled persons and the sending of the acceptance proposal to the person that is classed first, provided that, if the proponent who is classed first exercises the right of withdrawal, the acceptance is sent to the proponent that is classed second.

## Description

### Technical Field of The Invention

The invention generally refers to an on-line method of interactive offering and sale of real estate, and more particularly it relates to a series of procedures that allow to make the transactions related to the sale of an real estate, using telematic means, and inviting the proponent to make an offer, by using "channels", such as call-centers and the world wide web, for the presentation of the real estate, for the assistance to the purchaser, for the actions required for the formulation and the acceptance of the offers, etc.

### Background Art

In the last decade, the development and exponential spread of the world wide web has determined the access of the public to telematic financial and commercial transactions.

The market of real properties uses since many years the world wide web for the presentation and the offer of real estate to the public. However, this activity is restricted to a simple proposal , and does not include a real remotely effected negotiation, the purchase, and the performance of the various operative or bureaucratic acts which relate to the acceptance and the completion of the sale contract.

This partial use of the network is certainly a noticeable drawback for the purchaser, who is deprived of innumerable potential services, such as of information accessible at any time (24 hours each day) on a web site, and above all, is not capable of acceding in real time and in a "transparent" way, to the real price of the real estate.

Moreover, great companies, corporations and authorities in Italy are now selling their real properties, that is, they are trying to convey the real estate in whose ownership they are no more interested.

The indirect selling of the real estate, through third parties, does not always lead to the best price for the company. The use of intermediaries requires long times for the sale operation, mainly because - for a possible purchaser - an intermediary does not usually enjoy a sufficient credibility with regard to the reliability of presented information and the continuation of the negotiations and purchase procedures; on the contrary, the purchaser would have a total confidence if he could directly buy the real estate from the corporation itself.

Such delays in the sale of real properties, together with the specific costs for the intermediaries, produce additional expenditures or - in any case losses - for the corporation.

The conveyance of real estate through conventional "channels", that is through intermediaries, implies additional drawbacks, e.g. a sale of a considerable number of real estate, spread all over the country, with a use of a non-centralized management of the sale operations, and consequently a use of a noticeable number of resources.

However, probably the most relevant disadvantage is that the sale operations must be managed in the traditional ways [which are in accordance with the usual practice (preliminary contract, caution-money, doubling of the caution-money in case of withdrawal, the issue of considerable banker's checks) rather than with real rules provided by the legislator], and consequently, the purchaser must have at his disposal a noticeable amount of money before it may start to take part to the negotiations; therefore, a considerable number of potential purchasers are prevented from making offers since they have not sufficient liquidity.

The object of the present invention is to provide a method of carrying out the offer and sale procedures for real estate, using telematic means, by inviting the purchaser to make an offer, said method guaranteeing absolute fairness and allowing an immediate access - to the negotiation - of a potential purchaser having at his disposal only a minimum amount of currency.

A further object of the present invention is to provide a method of performing, through telematic means, offer procedures for the real estate concerned, said method introducing an effective mechanism of price increase, in order to obtain the best market price.

Still a further object of the present invention is to provide a method for performing the presentation and offering of real estate on sale, which allows to optimize the use of the available resources, due to a centralized management of presentation and negotiation procedures.

Finally, an object of the present invention is to provide a method for offering and selling real estate, by employing telematic means, and by inviting the purchaser to make an offer, using communication channels, procedures and technologies, which are of a standard type in the ambit of the electronic commerce, in order to reduce the cost of the system and to enable an easy maintenance thereof.

### Disclosure of Invention

These and further objects which will be clearly illustrated in the course of this description, are obtained through a method of presentation and performance of procedures related to offer and sale of real estate, through the employment of telematic means wherein the method inviting the purchaser to make an offer, operates in real-time and uses repeated series of irrevocable proposals of purchase made by the interested buyers.

A preliminary qualification (or "enabling") procedure must first be applied to a potential buyer or proponent, this procedure consisting in:
i - the payment of an enrolment fee as a guarantee of the seriousness of the person's intent;
ii - the assignment of a pseudonym to said person, or of a user's identifier, and of the related secret identification code;
iii - the receipt of at least one irrevocable proposal of purchase, in written form, although this may be anticipated by employing telematic means, said proposal being signed by the person who makes the proposal and being transmitted by means of a registered letter with advice of delivery, or by other means, provided a technical means is available to prove the receipt by the addressee. The new offers by the potential purchaser, which are made by using telematic means, are managed as follows:
   i - check of the classification, during the whole offer period of predetermined time extension, through a direct evaluation of the market trend;
   ii - communication that the offer has been exceeded, which requires an adaptation (increase) of his offer;
   iii - effective introduction of a new offer, using the user's identifier and the related secret code,
   iii.a ― this offer being less than an upper limit indicated in the previously sent irrevocable proposal, or
   iii.b - being above this upper limit, in which case the person making the proposal must use a duly signed new irrevocable proposal of purchase. In practice, the publication of a proposal corresponding to a higher price, necessarily implies the conclusive refusal - by the seller - of proposals corresponding to a lower price, with the exception -in order to constitute a reserve-, among those proposals, of the proposal that at the end of the procedure results to be the economically most advantageous one, said proposals being less than the proposal corresponding to the highest price.

The closure of this sale operation is subject to a previous unlimited postponement, by a possible time extension, and it provides for the following:
i - the publication of the classifications;
ii -the immediate refund of the enrolment fee to entitled persons;
iii - the sending of the acceptance proposal to the person who is classed first;
iv - in case the person classed first, exercises his right of withdrawal, the sending of the acceptance to the person who is classed second, in which case his offer is considered enough to exceed the offer of the third potential purchaser appearing in the third place in the classification list.

The present invention, according to a plurality of embodiments thereof, aims at providing an on-line system and a method which allow the implementation of a new market for the sale of real estate. Generally, this system is embodied by a data processing center which comprises a web site, which is accessible by a potential purchaser through the Internet

Since, notwithstanding the wide diffusion of the world wide web, there is still a number of people who are not able to connect themselves easily and continuously, the present invention provides at the same time for an access to telematic services, using a dedicated call-center.

On this web site the purchaser may have access to:
- information related to real estate which are put on sale;
- a series of interactive procedures which allow the purchaser to become "enabled" and therefore to take part to the award of a specific real estate, by making offers that increase little by little.

In the following, preferred embodiments of the invention will be discussed only for illustrative purposes, without thereby limiting its generality and its possible application fields.

In other words, although the system and method according to the present invention are particularly suited for managing the sale of real estate which are conveyed by corporations or companies and which are therefore sold "on a large scale", this method and this system may also be employed for the sale of real estate of any kind and of any proprietor whatever.

### Brief Description of Drawings

The preferred embodiments of the method according to the present invention are now illustrated with reference to the annexed figures, wherein:
Fig. 1 is a block diagram showing the general problems to be faced during the implementation of a sale system according to the present invention;
Fig. 2 (A-B-C) is a block diagram which indicates the steps followed in a particular procedure of the sale system shown in Fig. 1.

### Best modes of carrying out the Invention

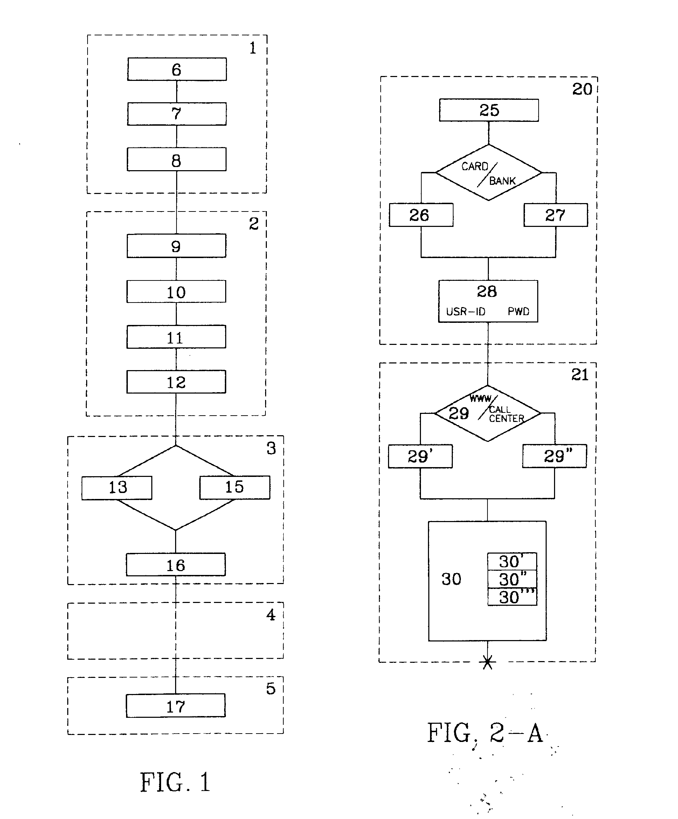

Fig. 1 shows - as stated above - the operative step sequence according to the present invention, which generally allows the realization of a sale service by a corporation who intends to convey its own real estate.

The initial step 1, concerning the production of data and estimates 1 related to the real estate, provides for the collection of documents 6 and the performance of investigations on the spot 7, together with the execution of photographs and planimetries, and the checking of the technical data accuracy and of the estimates 8 of the real estate.

In the planning and launching step 2, on the new market, the following sub-steps are provided for:
- the selection 9 of the real estate by a definition of the lot to be sold;
- the scheduling 10 of the real estate subjected to the offer procedure;
- the arrangement 11 of the visits' program;
- the definition of the local marketing plan, for each territorial allotment.

The step 3 of contacting the client and of assistance to the client, comprises the request of information 13, the management 15 of the visits' booking, and the execution 16 of the visits.

The procedure 4 of offer and purchase will be considered in detail below, with regard to its fundamental sub-steps.

The step sequence in the general scheme of Fig. 1, which concerns the series of operations necessary for carrying out a service according to the present invention, ends with a procedure which may be classified in the ambit of the post-award 5, during which the contract of purchase-and-sale is drawn up (step 17).

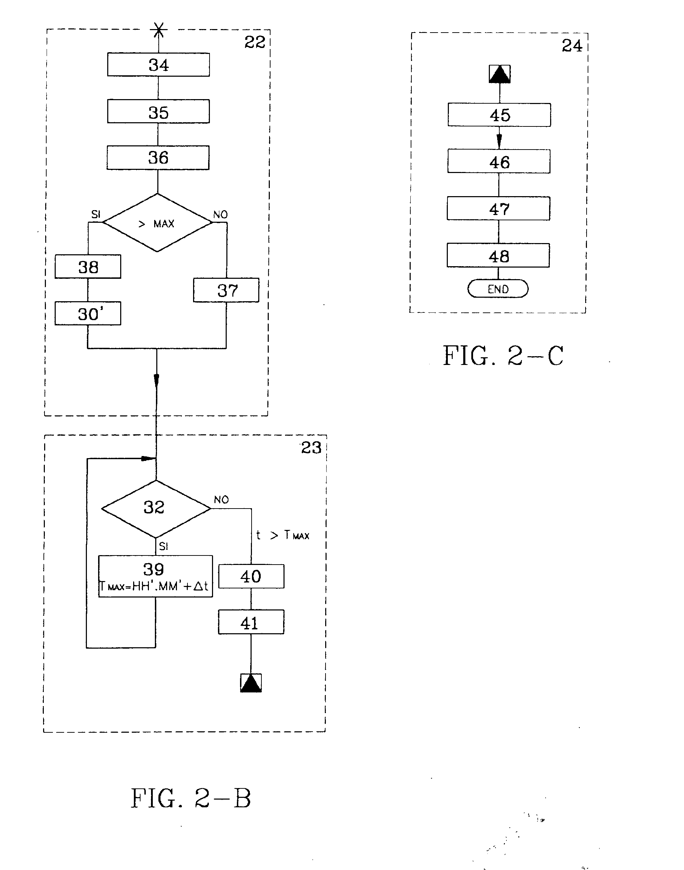

Fig. 2 shows in detail the sequence of operative steps, permitting to carry out an offer procedure 4.

As a prerequisite for being qualified (20) to take part to the procedure, there is provided a payment by the potential purchaser, of a minimum amount of money for the enrolment (at present equal to 500.000 Italian lire), this payment being made as guarantee of seriousness of intents of the purchaser and seller.

This payment may be made using a credit card 26 (on the Web or via the telephone), or through a bank transfer order 27.

Moreover, in the same step, the potential purchaser is "enabled" 28 to the market through the use of a pseudonym or a secret code.

For instance, the purchaser - by dialing a special phone number - may communicate his data to an operator, together with the bank detail and operation references, indicating also the specific real estate for which it intends to make his offers; thereafter, he will have the opportunity to chose a pseudonym and an identification password will be assigned to him. At this point, if the purchaser is connected to the world wide web, he may already directly make his first offer 21 on-line, otherwise, the call center will be at his disposal in predetermined hours of the day, for receiving and for inserting his first offer.

On the other hand, the same execution procedure 21, together with the insertion 29 of the first offer (through the telephone 29' or the Internet 29"), also includes the drawing up, the signing, and sending 30 of the following items:
- the irrevocable proposal of purchase 30', including the first offer;
- the regulations 30";
- the authorization 30"' for handling personal data according to the law concerning the privacy.

The sending may be effected by means of a registered letter with advice of delivery; however, it is obvious that this procedure will be accelerated as soon as an "electronic signature" will be introduced.

In other words, according to a strictly legal aspect, the first proposal must have a written form and must bear the original signature of the person who makes the proposal, and the same will hold for each further new proposal which should become necessary in the course of the offer procedure, wherein this further proposal should be handed over, or transmitted by registered letter with advice of delivery, or transmitted in a similar manner, provided that a technical means is available to prove the receipt by the addressee.

The proposal should contain, besides the data allowing the identification of the proponent, also the significant information for carrying out the successive procedures related to new offers, such as:
- the locality and the address of the real estate which the purchaser intends to buy;
- the identification code on the web site, of the real estate which he intends to buy;
- the sale price, and the option to "raise the bidding" up to an amount equal to a multiple (e.g. twice) of the basic price available on the web site, but not more than a maximum threshold in the particular case that the proposal concerns an real estate whose price is indicated - in the web site - as secret (not available to the public);
- the explicit acceptance of the sale regulations;
- an enclosed and duly signed copy of the sale regulations;
- the irrevocability time term of the proposal.

Moreover, to this proposal there should be enclosed:
- documents which prove the powers assigned to an agent, if any (a power of attorney, a (e.g. notarial) certificate, a measure taken by the judge);
- a document certifying the effected payment of the enrolment fee required to take part to the offer procedure;
- the obligation to integrate this payment with a penitential caution-money;

The amount of money corresponding to the payment of the enrolment fee will be:
a) reckoned with the price, during the purchase contract;
b) refund without interest, to those who made irrevocable proposals that where not accepted;
c) refund without interest, to those who have exercised the right of withdrawal (see below);
d) withheld as a fine or penalty (penitential caution-money), if the purchaser, after the time limit for exercising the right of withdrawal has elapsed - as explained below -, does not meet the obligations he had definitively assumed with the seller. For the performance 22 of new offers by a purchaser who has been admitted ("enabled"), the following is provided for:
   - a check 34 of the classification - during the whole time available for the proposal of an offer which is called 'open market' and which has a predetermined duration -, by means of a real-time evaluation of the market trend, either directly, with the use of the Internet, or by calling a call-center,
   - the communication that the offer proposed by this purchaser has been exceeded (35); said communication being performed by telephone or by sending an e-mail,
   - the insertion 36 of a new offer (by telephone or through the world wide web), said offer being:
      i - less than an upper limit (37) which was indicated in the previous irrevocable proposal, or
      ii - higher than the upper limit (38), in which case the purchaser must send a new irrevocable proposal of purchase.

In practice, as stated above, the publication on the web site of a proposal corresponding to a higher price, will necessarily imply a refusal by the seller of all proposals corresponding to a lower price, with the exception - among the latter proposals - of the proposal that at the end of the procedure will result to be the economically most advantageous one, said latter proposal being less than the proposal with the highest price. This offer will in fact be accepted provided that the person who made the highest offer has exercised the right of withdrawal.

If a purchaser is no more interested in an real estate for which he made an offer insertion, and intends to participate to another 'market' (sale procedure), he may do so by calling the call center and by requesting a switch option - on condition that he is not classed first or second -, and in this case too, he must draw up a new irrevocable proposal of purchase.

In other words, in order to guarantee the maximum honesty (fairness), the sequence of proposals that have arrived is published on the web site, in order to permit to any of the proponents to verify if his own offer has been exceeded, and possibly, to exercise the faculty of adapting his price by making a new offer, with the same modality and form as for the first offer, in case the "upper limit" of his own proposal has been exceeded.

In order to adapt his offer, but without exceeding the upper limit contained in his proposal, the proponent introduces from time to time his 'adapted price', either directly (on the web site), or by dialing the number of the call center, using during these operations his pseudonym or his secret code.

The 'market closure procedures' 23 provide for the possibility of an unlimited postponement 32, by making use of a possible time extension 39; for instance, it could be agreed that all markets close at hh.mm (hour/minutes), except that the closing time will be extended by one hour, if a new offer is made during the last market hour. The extra opening time of the market starts running from the time the last offer is made.

The successive publication 40 of the final classification is followed by the immediate refund of the enrolment fee 41, starting from the person classed third onwards.

In the final step of acceptance of the offer 24, and subject to the payment by the purchaser of an additional fee as penitential caution-money, the following items are sent (transmitted):
- first of all, a communication 45 to the person who is classed first (by telephone or e-mail);
- the acceptance documentation 46;
- the documentation concerning a possible exercise of the right of withdrawal 47.

In fact, the purchaser could change his mind and request refund of the enrolment fee without incurring in any additional costs. In case this right is not exercised within a predetermined time period from the date of receipt of the acceptance, the call-center may contact the purchaser in order to conclude the sale.

If the person who is classed first withdraws from the sale procedure, the acceptance is sent to the person classed second. With regard to the latter person, his offer will be considered sufficient and will exceed that of the third classed proponent.

However, the right of withdrawal may be exercised even in this case.

When the market closes, the enrolment fee 48 is refunded according to the following modalities:
- a person who is not classed first or second will have his enrolment fee refunded immediately after the closing of the market;
- the person who is classed second must wait until the withdrawal deadline of the first-classed person has passed, since he could take his place in the eventuality of a withdrawal;
- the person who is classed first will have his enrolment fee refunded if he withdraws.

In case the latter person does not withdraw and agrees with (that is, signs) the contract of purchase, the enrolment fee will be deducted from the sale price and will be considered a deposit (partial payment). Only in the eventuality that the purchaser does not withdraw and does not enter into the contract of purchase, the enrolment fee will be withheld as a penalty (penitential caution-money).

On the other hand, although the notice of acceptance may be anticipated in any way (telephone, facsimile, e-mail), in order to be able to draw up the contract, the acceptance must be received by the addressee in a registered letter with advice of delivery, or any equivalent manner, provided that a technical means is available to prove the receipt by the addressee.

Under the strictly legal point of view, this wide decision faculty of the purchaser, is equivalent to the grant - by the seller to the purchaser -, of the right to exercise the withdrawal without any negative consequence, by referring generally to the Italian law (D.P.R. 513/97 and D.Lgs. 50/92) for personal property; this insures that the sale procedure will be fair, also in consideration of the above mentioned general sale activity performed by the Corporation.

This right must be exercised in written form, by registered letter with advice of delivery sent to the seller and anticipated by a facsimile transmission; in case this act is not performed within a predetermined time limit following the acceptance of the proposal, the right may no longer be exercised.

If the purchaser does not withdraw within the time limits provided for, the amount already paid by the purchaser to take part to the offer procedure - including the enrolment fee and the integration or additional fee paid afterwards - will be considered paid as a penitential caution-money and deposit, except the case when greater damages have been caused.

For instance, at present the obligation to pay an additional fee as a penitential caution-money, provides for the payment of an amount to the extent of L. 5.000.000, in case the object of the proposal is a residential real estate (house and/or appurtenance), or a non-residential real estate, with a basic price that may reach L. 250.000.000, and to the extent of L. 50.000.000, in case of a non-residential real estate with a basic price exceeding 250.000.000 or in case the price is not public. The right of withdrawal may be exercised:
a) within 30 working days from the receipt of the acceptance of the proposal, for real estate not for residential use, and having a basic price exceeding 200 million lire or a price not known to the public;
b) within seven working days from the receipt of the acceptance of the proposal, for all other real estate.

If this proponent withdraws, the seller sends the acceptance to the proponent that had made a proposal that has an economic value immediately less than the initially accepted one.

The latter proponent will pay for the sale the price he had offered in the proposal that would have exceeded all other proposals, neglecting the proposal of the proponent who has withdrawn.

The sale contract is an authenticated simple contract, signed at different times and in different places.

The signature of the purchaser will be appended in presence of a notary chosen by him, to whom the seller will have sent the draft of the contract containing the description and the cadastral and town-planning data, necessary for the validity of the contract.

The notary of the purchaser - before receiving his signature - makes the required checks and draws from the purchaser an amount of money corresponding to the sale price together with the amounts necessary for the payment of the purchase taxes, the costs, and the notary honorarium, both for the purchaser's notary and the notary that receives the signature of the seller.

The purchaser's notary transmits to the seller's notary the duly authenticated contract (deed), together with the above mentioned amounts of money, after deduction of his own honorarium.

The notary of the seller delivers to the seller the amount of money corresponding to the sale price, and at the same time the seller appends his signature; thereafter, the notary of the seller arranges for the registration, transcription and assignment formalities of the deed, and sends an authenticated copy of the deed and the registration note to the purchaser, at the address written on the deed itself.

### Advantages

Obviously, for the performance of the disclosed procedures, it is of primary importance, that the seller guarantees that he is the effective owner of the sold real estate, or part of real estate, and/or of the transferred rights, and that he guarantee the non-existence of prejudicial registries or transcriptions, being however exonerated from showing the documents of ownership.

Subject to these prerequisites, the carrying out of the method proposed by the present invention allows to obtain numerous advantages, such as:
- the reliability and the authenticity of the sale documentation;
- the quality and the reliability of the information, allowing to "filtrate" the requests and to focus on the clients that are really interested;
- a "mechanism" for arranging new visits on request, which optimizes the use of the resources, insuring at the same time a high quality for the service that is offered;
- a local marketing plan that reduces the cost of contacting the clients, and increases the number of useful contacts;
- the optimization of the use of the resources, through a "centralization" of the management of the visits' schedule;
- a continuous assistance made possible by the use of call centers, in order to illustrate the procedure and clarify possible procedural doubts;
- the simultaneous use of call centers, and of the world wide web, increases the convenience of this kind of service for the client, since the latter may choose the most suitable means;
- a mechanism of raising, that "involves" and focuses the attention of the potential purchaser, thereby permitting to reach the real price,
- the certainty about the time required for the procedure.

## Claims

1. A method of presentation and performance of offer and sale procedures for real estate, by using telematic means and by inviting the potential purchaser to make an offer, **characterized in that** it operates in real-time, with a circular reiterated series of irrevocable proposals of purchase made by the interested purchasers, the method comprising the following steps:
I - a preliminary "enabling" or qualification step for the potential purchaser or proponent, effected through:
i - a payment (25) of an enrolment fee;
ii - the assignment to the proponent of a pseudonym or user's identification, and of a related secret identification code;
iii - the acceptance of at least one first irrevocable proposal of purchase, prepared in written form, but anticipated using telematic means, and bearing the original signature of the proponent, the said irrevocable proposal being transmitted by registered letter with advice of delivery or any other equivalent manner, provided a technical means is available in the latter case to prove the receipt by the addressee;
II - the performance of new offers, effected by the proponent through the use of telematic means, based on:
i - a check (34) of the classification during the whole period of offering - which has a predetermined duration-, by a direct real-time evaluation of the market trend,
ii - the communication (35) that his offer has been exceeded and that the price of his offer should be adapted,
iii - the effective insertion (36) of a new offer, making use of his user's identification and the related secret code,
iii.a this offer being less than an upper limit, which is indicated in the previously sent irrevocable proposal, or
iii - b being above this upper limit, in which case the proponent must use a new irrevocable proposal of purchase with original signature, and a new irrevocable proposal of purchase at a higher price will in any case imply the refusal, by the seller, of all proposals with a lower price, except - in order to constitute a reserve - the proposal that at the end of the offer procedure will be the economically most advantageous one among these latter proposals, but which is less then the price of the absolutely highest proposal;
III - the closing of the market, subject to a previous unlimited postponement through a possible extension, followed by:
i - the publication of the classifications (40);
ii - the immediate refund (41) of the enrolment fee to the entitled persons;
iii - the transmission of the acceptance of the proposal to the person who is classed first, subject to a previous payment of an additional fee as a penitential caution-money, and
iv - in case the person who is classed first exercises his right of withdrawal, the transmission of the acceptance to the person who is classed second, his offer being then considered sufficient to exceed that of the person who is classed third.

2. A method of presentation and performance of offer and sale
procedures for real estate, by using telematic means and by inviting the purchaser to make an offer, according to claim 1, **characterized in that** simultaneously with the first duly signed proposal, made by the proponent, the following information, relevant for carrying out the subsequent procedure pertaining to new offers, is indicated together with the identifying data:
- the locality and the address of the real estate, or part of the real estate, which the proponent desires to buy,
- the number of the identification code on the web site of the real estate or of that pert of the real estate that the proponent intends to buy,
- the sale price, with the option to raise the price, up to an amount equal to a multiple of the basic price indicated in the web site, or equal to a maximum threshold, or upper limit, in case the proposal relates to an real estate whose price is indicated as being confidential in the same web site,
- the explicit acceptance of the sale regulations;
- an enclosed copy of the duly signed sale regulations;
- the time term of irrevocability of the proposal;
- documents certifying the powers of a possible representative,
- the proof of the payment of the enrolment fee which is required by the procedure itself, in order to be admitted to make offers;
- the obligation to integrate said payment with penitential caution money.

3. A method of presentation and performance of the offer and sale
procedures, using telematic means and inviting the proponent to make an offer, according to claim 1, **characterized in that** the closing of the market is subject to an unlimited postponement, through a possible time limit extension, defining the additional time extension as being equal to a predetermined time period running from the time the last offer has been made.

4. A method of presentation and performance of the offer and
sale procedures, using telematic means and inviting the proponent to make an offer, **characterized in that** a switch option to a different real estate is provided for a proponent who is no more interested to a particular real estate for which it had already inserted an offer, and who is interested in taking part to another market; wherein the switch to a further real estate is realized by drawing up a new irrevocable proposal of purchase, and on condition that the proponent is not classed first or second.

5. A method of presentation and performance of offer and sale
procedures for real estate , using telematic means and inviting the proponent to make an offer, according to claim 1, **characterized in that** it is provided that a proponent who does not withdraw his maximum offer within a predetermined time limit, must receive a notice of acceptance, in order to make the contract, and the said notice of acceptance which is sent to the proponent must be transmitted by a registered letter with advice of delivery, or in any other equivalent manner, provided that there exists a technical means for proving the receipt by the addressee.

6. A method of presentation and performance of offer and sale
procedures for real estate, using telematic means and inviting the proponent to make offers, according to claim 1, **characterized in that** the initial enrolment fee required at the start of the procedure in order to take part to it, is handled according to the following steps, based on the result of the sale procedure:
i - it is reckoned together with the price at the time the sale contract is made;
ii - it is refunded without interest to those who made irrevocable proposals, and whose offers have not been accepted;
iii - it is refunded without interest to those who have exercised the right of withdrawal;
iv - it is withheld as penalty in case the purchaser, after the period for withdrawal has elapsed, does not fulfil the obligations which he had definitively assumed with the seller.

7. A method of presentation and performance of offer and sale
procedures for real estate, using telematic means and inviting the proponent to make an offer, according to claim 1, **characterized in that** the purchase contract is a simple contract, which is authenticated by signatures appended at different times and in different places, wherein:
i - the signature of the purchaser is appended in presence of a notary chosen by the purchaser, to whom the purchaser has sent the scheme or draft of the deed, containing the description and the cadastral and town-planning data required for the validity of the contract itself,
ii - the notary of the purchaser, before receiving the signature of the purchaser, makes the necessary checks and draws from the purchaser the amount of money corresponding to the sale price, and in addition, the amounts of money required for the payment of the taxes, the costs, and notary honorariums, the latter including both his own honorarium and that of the notary which will receive the signature of the seller,
iii - the notary of the purchaser transmits to the notary of the seller the duly authenticated deed, together with the above mentioned amounts, after detuction of his own honorarium
iv - the notary of the seller delivers the amount of money corresponding to the sale price, to the seller, simultaneously with the signing of the deed, and provides for the registration, transcription and transfer of the deed, and sends the certified copy of the deed and the note of transcription to the purchaser, at the address indicated in the deed itself.
